# EUROPÄISCHE PATENTSCHRIFT

(11) **EP 0 510 504 B1**
(45) Veröffentlichungstag und Bekanntmachung des Hinweises auf die Patenterteilung: **19.02.1997**
(21) Anmeldenummer: 92106504.1
(22) Anmeldetag: 15.04.1992
(51) Int. Cl.: H04L 5/14

(54) **Anwendung von einen Pingpong-Verfahren bei optischer Übertragung**
Use of "ping-pong" for optical transmission
Utilisation d'un procédé "ping-pong" pour la transmission optique

(30) Priorität: 26.04.1991 DE 4113661
(43) Veröffentlichungstag der Anmeldung: 28.10.1992
(73) Patentinhaber: KE KOMMUNIKATIONS-ELEKTRONIK GMBH & CO, D-30179 Hannover (DE)
(72) Erfinder: Schröder, Jürgen, W-3257 Springe 1 (DE); Brahms, Martin, W-3000 Hannover 91 (DE); Chahabadi, Ziaedin, Dr., W-3252 Bad Münder 1 (DE)
(74) Vertreter: Döring, Roger, Dipl.-Ing.

(56) Entgegenhaltungen:
- EP-A- 0 261 740
- EP-A- 0 426 961
- IEEE TRANSACTIONS ON COMMUNICATIONS Bd. 30, Nr. 9, September 1982, NEW YORK US Seiten 2109 - 2116 SHIMIZU UND GOTO 'An integrated voice/data terminal with simple synchronisation circuits using an 80 kbit/s Ping-Pong method'

## Beschreibung

Die Erfindung bezieht sich auf ein Verfahren zur bidirektionalen Übertragung von digitalen Daten über eine Glasfaser, mit welchem die Daten vom Sender einer Station zum Empfänger der am anderen Ende der Glasfaser befindlichen Station übertragen werden, mit welchem jeweils die Bits von zu sendenden kontinuierlichen Datenströmen ohne Änderung der Übertragungsgeschwindigkeit in gleichbleibender Anzahl paketweise um einen Faktor >2 zu Bursts komprimiert werden, mit welchem die Bursts der einen Übertragungsrichtung in den Pausen zwischen den Bursts der anderen Übertragungsrichtung vom jeweiligen Sender über die Glasfaser übertragen werden und mit welchem die kontinuierlichen Datenströme aus den vom jeweiligen Empfänger empfangenen Bursts wiedergewonnen werden (DE-Buch "Pulstechnik" von Hölzler und Holzwarth, Band II, Springer-Verlag 1984, Seiten 402 bis 412).

Durch die bidirektionale Datenübertragung über eine Glasfaser können bestehende Übertragungswege besser ausgenutzt werden. Eine Übertragung der Signale von einem Sender einer an die Glasfaser angeschlossenen Station zum Empfänger der Gegenstation ist ohne zusätzliche Maßnahmen nur möglich, wenn der Sender der Gegenstation nicht sendet. In Abhängigkeit von der Dauer des Sendebetriebs der gerade sendenden Station ist dabei die Wartezeit der anderen Station bemessen, während der dieselbe keine Daten aussenden kann. Die der dadurch zwangsläufig passiven Station zufließenden Daten müssen während des Empfangsbetriebs gespeichert werden, was einen relativ großen Aufwand erfordert. Es können außerdem wichtige Nachrichten zu lange blockiert werden, wenn eine der Stationen längere Zeit nicht senden kann. Hinzu kommt, daß ein Telefongespräch (digitalisiert) über einen solchen Übertragungsweg kaum möglich ist.

Dieser Mangel wird durch den eingangs geschilderten Burstbetrieb nach dem DE-Buch "Pulstechnik" behoben. Bei diesem bekannten Verfahren können beide Stationen dann zeitgleich senden und auch zeitgleich empfangen, wenn sichergestellt ist, daß die Bursts der beiden Übertragungsrichtungen in den Stationen nicht kollidieren. Das ist dadurch realisiert, daß die Bursts der einen Übertragungsrichtung in den durch die Komprimierung der Bits der kontinuierlichen Datenströme entstandenen Pausen zwischen den Bursts der anderen Übertragungsrichtung übertragen werden. Die Übertragungsraten der zu sendenden Datenströme werden durch Taktgeber bestimmt. Damit keine Kollisionen hervorrufenden Verschiebungen der beiden gegenläufigen Datenströme auftreten, wird bei dem bekannten Verfahren die eine Station als "Master" betrieben, während die andere Station als "Slave" von der Masterstation mit dem Takt versorgt wird. Der Aufwand ist entsprechend hoch.

Der Erfindung liegt die Aufgabe zugrunde, das eingangs geschilderte Verfahren so weiterzubilden, daß die Taktvorgabe in den beiden Stationen vereinfacht werden kann, so daß die in den Stationen vorhandenen Geräte und Bauteile weiterverwendet werden können.

Diese Aufgabe wird gemäß der Erfindung dadurch gelöst,
- daß zur Festlegung der Übertragungsraten in den Stationen an den beiden Enden der Glasfaser voneinander unabhängige externe Taktgeber verwendet werden,
- daß bei einer Abweichung der Frequenzen der beiden Taktgeber voneinander die Bursts des Datenstroms mit der niedrigeren Übertragungsrate in Abständen gegenüber den Bursts des anderen Datenstroms jeweils um eine Bitbreite des zugehörigen kontinuierlichen Datenstroms früher gesendet werden,
- daß diese Verschiebung der Bursts dem jeweiligen Empfänger durch den dem ersten zu verschiebenden Burst vorangehenden Burst durch mindestens ein entsprechendes Informationsbit mitgeteilt wird und
- daß dem die Verschiebung meldenden Burst des Datenstroms mit der niedrigeren Übertragungsrate an definiertes Stelle innerhalb seiner Datenbits ein Zusatzbit hinzugefügt wird, das vom Empfänger der empfangenden Station nicht mit ausgelesen wird.

Mit diesem Verfahren können beide Stationen dann zeitgleich senden und auch zeitgleich empfangen, wenn sichergestellt ist, daß die Bursts der beiden Übertragungsrichtungen in den Stationen auch bei voneinander abweichenden Frequenzen der beiden externen Taktgeber nicht kollidieren. Abweichungen dieser Frequenzen voneinander ergeben eine Änderung der Übertragungsraten der beiden kontinuierlichen Datenströme und führen zu einer Verschiebung der Bursts der beiden entgegengesetzten Übertragungsrichtungen relativ zu einander. Um durch diese Verschiebung bedingte Kollisionen der Bursts in den Sende- und Empfangsgeräten zu vermeiden, wird mit diesem Verfahren der Datenstrom mit der niedrigeren Übertragungsrate gegenüber dem anderen korrigiert. Für die Korrektur wird jedesmal eine Verschiebung der Bursts um die Breite (zeitlich) eines Bits des zugehörigen kontinuierlichen Datenstroms derart vorgenommen, daß der Burst früher gesendet wird. Diese Bitbreite entspricht einer Taktperiode des kontinuierlichen Datenstroms, so daß die Verschiebung der Bursts den Phasenjitter der empfangenen Daten nicht erhöht. Der Empfänger der Gegenseite wird davon in Kenntnis gesetzt, daß der nächste ankommende Burst um eben diese eine Bitbreite gegenüber dem vorangehenden versetzt früher vankommt. Die Information dazu wird mit dem vorangehenden Burst übertragen, und zwar durch mindestens ein Bit, das in den Steuerbits enthalten sein kann. Der Empfänger weiß also, daß er sich auf einen jetzt etwas früher ankommenden Burst einzustellen hat.

Dieses Verfahren ist einfach durchzuführen und mit wenigen zusätzlichen Bauteilen zu realisieren. Da stets der "langsamere" Datenstrom korrigiert wird, ist eine eindeutige Zuordnung der Korrektur gegeben. Es muß dabei lediglich sichergestellt sein, daß immer nur in einer Station korrigiert wird, auch wenn die Übertragungsraten der beiden Datenströme so schwanken, daß der an sich "langsamere" Datenstrom der "schnellere" wird. Das kann beispielsweise durch Temperaturänderungen ausgelöst werden, welche die Frequenzen der Taktgeber verändern können. Durch dieses Verfahren ist auch sichergestellt, daß in den Stationen die schon vorhandenen Geräte und Einheiten weiter verwendet werden können. Das wird durch den jeder Station zugeordneten eigenen externen Taktgeber ermöglicht, der in den gegebenen Grenzen die Übertragungsrate des auszusendenden Datenstroms, unabhängig vom Takt der anderen Station, bestimmt. Schließlich können beide Stationen bezüglich der Korrektureinheiten identisch aufgebaut werden, da in beiden Stationen die Korrektur durchgeführt werden kann. Hinzu kommt, daß bei diesem Verfahren nur ein handelsüblicher Speicher (FIFO) benötigt wird, der eine der Nutzbitrate des jeweiligen kontinuierlichen Datenstroms entsprechende maximale Speichertiefe hat.

Zur Anpassung der Übertragungsraten wird dem die Verschiebung anzeigenden Burst an einer definierten Stelle innerhalb der Datenbits ein Zusatzbit eingefügt, das nicht vom Empfänger ausgelesen wird. Die definierte Stelle wird vor Beginn der Übertragung vereinbart und sowohl den Sendern als auch den Empfängern beider Stationen aufgegeben, so daß die Sender das Zusatzbit an der richtigen Stelle einfügen und die Empfänger dasselbe an der richtigen Stelle als solches erkennen. Die Bursts haben dadurch stets eine gleichbleibende Länge, so daß sich die Position zusätzlicher Steuer- und Informationsbits gegenüber dem Startbit auch im korrigierten Burst nicht verändert.

Das Verfahren nach der Erfindung wird im folgenden anhand der Zeichnungen als Ausführungsbeispiel erläutert.

Es zeigen jeweils in schematischer Darstellung:

Fig. 1 einen kontinuierlichen Datenstrom mit daraus erzeugten Bursts.

Fig. 2 zwei in entgegengesetzter Richtung laufende Datenströme mit zu Bursts komprimierten Daten.

Fig. 3 den Aufbau eines Bursts.

Fig. 4 eine Datenübertragungsstrecke in stark schematisierter Darstellung.

Fig. 5 eine der Stationen der Datenübertragungsstrecke nach

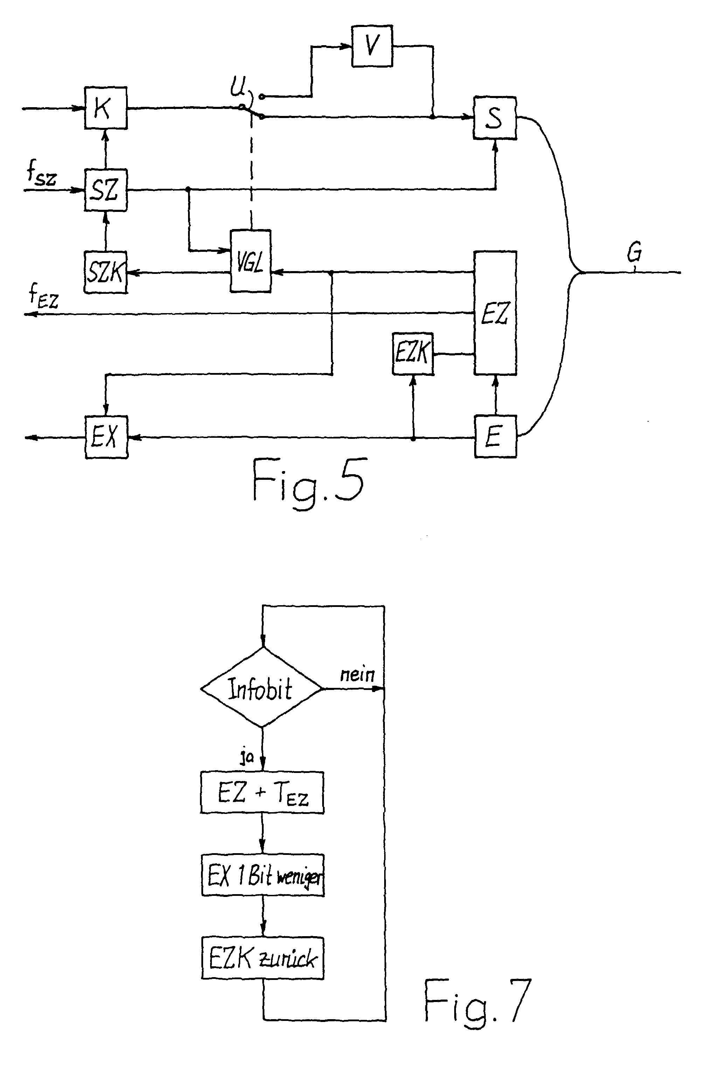

Fig. 4 in ergänzter Form.

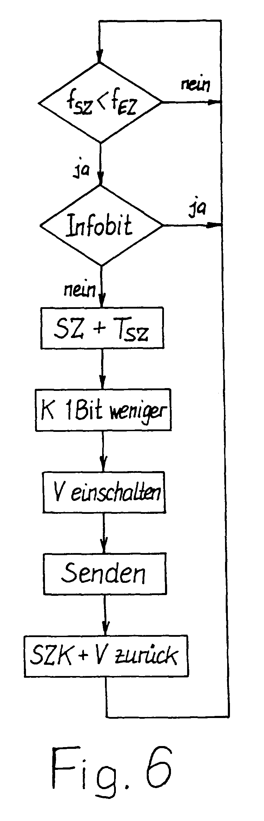

Fig. 6 und 7 zwei Flußdiagramme.

Stellvertretend für alle möglichen Übertragungsraten wird die Erfindung für das 2 MBit-System beschrieben. Die Bedingungen für den Einsatz des Systems sind beispielsweise in der CCITT-Empfehlung G 703 angegeben. Die Übertragungsrate kann danach zulässig um ± 50 ppm schwanken. Es gelten also die Grenzen 2047,9 kBit/s bis 2048,1 kBit/s.

Es wird angenommen, daß der eine Datenstrom mit dem exakten Wert des 2 MBit-Systems übertragen wird, also mit 2048 kBit/s. Der andere, entgegengesetzt laufende Datenstrom soll eine niedrige Übertragungsrate von 2047,9 kBit/s haben. Er ist also "langsamer" als der andere Datenstrom.

In beiden Datenströmen wird vor dem Senden jeweils eine stets gleichbleibende Anzahl von beispielsweise 2048 Bits um einen Faktor, der größer als "2" ist, zu einem Burst komprimiert. Die 2048 Bits des kontinuierlichen Datenstroms haben eine zeitliche Länge von 1000 µs. Bei einem Komprimierungsfaktor "4" beträgt die zeitliche Länge der daraus erzeugten Bursts also 250 µs. Dadurch entsteht zwischen jeweils zwei Bursts eines Datenstroms eine Pause mit einer zeitlichen Länge von 750 µs.

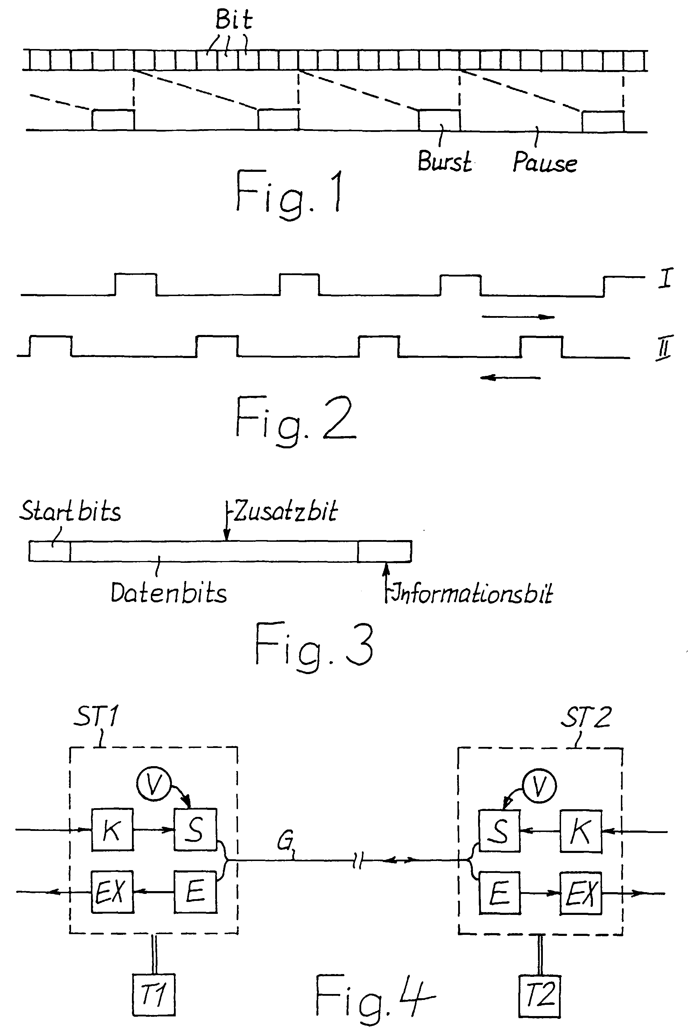

Die Bursts der beiden entgegengesetzt laufenden Datenströme werden nun jeweils in den Pausen zwischen den Bursts der Gegenrichtung übertragen, so wie es prinzipiell in Fig. 2 dargestellt ist. Sie gelangen also zu den Empfängern der Stationen, wenn deren Sender nicht aktiv sind. Kollisionen können daher nicht auftreten.

Um das bei den oben angegebenen, unterschiedlich schnellen Datenströmen sicherzustellen, werden die Bursts des Datenstroms II mit der niedrigeren Übertragungsrate, also des langsameren Datenstroms, alle 10 ms um die zeitliche Breite eines Bits (≈488 ns) des aus Fig. 1 ersichtlichen kontinuierlichen Datenstroms in Übertragungsrichtung verschoben. Die Verschiebung wird dadurch realisiert, daß aus dem kontinuierlichen Datenstrom von 2048 kBit/s nur 2047 Datenbits für den entsprechenden Burst verwendet werden. Es werden also nur 2047 Datenbits in den die Komprimierung der Daten durchführenden Komprimierer eingelesen. Dieser Burst wird daher entsprechend früher gesendet. Die durch die niedrigere Übertragungsrate bedingte Verschiebung gegenüber den Bursts des Datenstroms I wird dadurch ausgeglichen. Bei den angenommenen Zahlenwerten wird der langsamere Datenstrom II jeweils nach jedem 10. Burst korrigiert.

Damit der jeweilige Empfänger das weiß, wird ihm mit jedem dem früher zu sendenden Burst vorangehenden Burst die Information übermittelt, daß der folgende Burst zeitlich um eine Bitbreite früher eintrifft. Dazu wird dem die Information enthaltenden Burst vorzugsweise in seinen Steuerbits mindestens ein Informationsbit eingefügt.

Zur Anpassung der Übertragungsraten der beiden Datenströme I und II wird dem meldenden Burst des langsameren Datenstroms II jeweils ein Zusatzbit hinzugefügt, das vom jeweiligen Empfänger nicht mit ausgelesen wird. Dieses Zusatzbit wird dem komprimierten Burst als 2048. Datenbit in seinen Datenbits zugefügt. Es ersetzt dabei als "Lückenfüller" das bei der Komprimierung fortgelassene Datenbit. Die Position des Zusatzbits muß definiert sein. Sie muß also sowohl im Sender als auch im Empfänger der Stationen bekannt sein. Diese Geräte werden vor Beginn der Übertragung entsprechend programmiert.

Das beschriebene Verfahren ist auch dann anwendbar, wenn über die eine Glasfaser zwei oder mehr Datenströme gleichzeitig bidirektional übertragen werden.

Eine Übertragungsstrecke, über die digitale Daten mit dem Verfahren nach der Erfindung übertragen werden können, geht in einfacher Darstellung beispielsweise aus Fig. 4 hervor:

Sie besteht aus zwei mit voneinander unabhängigen, externen Taktgebern T1 bzw. T2 ausgerüsteten Stationen ST1 und ST2, zwischen denen eine Glasfaser G angeordnet ist. Zu jeder Station gehören ein Komprimierer K, ein Sender S, ein Empfänger E und ein Expander EX. Jedem Sender S ist außerdem ein Verschieber V zugeordnet.

Die von den Stationen ST1 und ST2 zu sendenden kontinuierlichen digitalen Datenströme werden im Komprimierer K zu Bursts komprimiert und von den Sendern S auf die Glasfaser G gegeben. Die Bursts werden von den Empfängern E der jeweiligen Gegenstation empfangen und von den Expandern EX wieder in kontinuierliche Datenströme umgewandelt. Die Bursts des "langsameren" Datenstroms werden vom Verschieber V im geschilderten Sinne verschoben. Das wird dadurch realisiert, daß der Komprimierer K zur Korrektur des Datenstroms ein Bit überspringt. Er springt dann beispielsweise vom Bit 1004 zum Bit 1006 und nicht zum Bit 1005. Die Bursts des langsameren Datenstroms werden dann um ein Bit bzw. um eine Bitbreite früher gesendet und auf der Empfangsseite entsprechend verarbeitet.

Als Komprimierer K kann grundsätzlich jeder geeignete elektronische Speicher verwendet werden. Dabei kann es sich beispielsweise um einen FIFO-Speicher handeln, in den die Daten beispielsweise mit einer Taktgeschwindigkeit von 2 MHz eingelesen werden. Bei einem Komprimierungsfaktor von "4" werden die Daten dann mit einer Taktgeschwindigkeit von 8 MHz aus dem Speicher ausgelesen und dem Sender S zugeführt.

Der Expander EX kann ein gleicher Speicher wie der Komprimierer K sein. Die vom Empfänger E kommenden Daten (Bursts) werden mit der höheren Taktgeschwindigkeit in den Expander EX eingelesen und mit der niedrigeren Taktgeschwindigkeit ausgelesen.

In Fig. 5 ist die Station ST1 genauer dargestellt. Dieser Aufbau gilt analog auch für die Station ST2. Der Ablauf des Verfahrens nach der Erfindung wird im folgenden anhand von Fig. 5 in Verbindung mit den Flußbildern nach den Fig. 6 und 7 ausführlicher erläutert:

Für den "Sendeteil" der Station ST1 sind in Fig. 5 neben dem Komprimierer K, dem Sender S und dem Verschieber V noch ein Sendezähler SZ und eine Sendezählerkorrektur SZK eingezeichnet. Analog dazu weist der "Empfangsteil" der Station ST1 neben dem Empfänger E und dem Expander EX einen Empfangszähler EZ und eine Empfangszählerkorrektur EZK auf. Es ist außerdem ein Vergleicher VGL eingezeichnet. Durch die beiden als Hauptzähler dienenden Zähler SZ und EZ werden alle Geräte und Bauteile der Station ST1 zeitlich gesteuert. Sie zählen beispielsweise für das oben erläuterte 2MBit-System jeweils in 1 ms 2048 Bits. Sie können allerdings auch mit höherer Geschwindigkeit zählen.

Der am Komprimierer K ankommende kontinuierliche Datenstrom wird zu einem aus Bursts bestehenden Datenstrom komprimiert und in der in Fig. 5 eingezeichneten Stellung des Umschalters U direkt zum Sender S gegeben. Der Vergleicher VGL vergleicht permanent die Frequenzen f_{SZ} des zu sendenden Datenstroms und f_{EZ} des von der anderen Station ST2 ankommenden empfangenen Datenstroms.

Solange beide Frequenzen gleich sind oder nur geringfügig voneinander abweichen passiert nichts. Wenn eine größere Abweichung registriert wird, die beispielsweise einer Verschiebung des kontinuierlichen Datenstroms um eine Bitbreite entspricht, wird vom Vergleicher VGL dann die Korrektur des zu sendenden Datenstroms eingeleitet, wenn gleichzeitig vom Empfänger E die Information vorliegt, daß der empfangene Datenstrom nicht korrigiert ist. Zur Korrektur wird der aus dem langsameren Datenstrom erzeugte Burst um eine der Taktperiode T_{SZ} des kontinuierlichen Datenstroms entsprechende Zeit früher gesendet (Fig. 6).

Der Sendezähler SZ erhält dazu durch die Sendezählerkorrektur SZK die Information, daß der Datenstrom um eine Bitbreite verschoben werden soll. Der Sendezähler SZ wird dann um eine Taktperiode T_{SZ} korrigiert und der Komprimierer K liest ein Bit weniger ein. Der so erzeugte Burst wird durch den vom Vergleicher VGL betätigten Umschalter U über den Verschieber V zum Sender S geführt und dadurch um die Taktperiode T_{SZ} verzögert gesendet. Danach werden die Sendezählerkorrektur SZK und der Umschalter U wieder zurückgesetzt. Die folgenden Bursts werden dann um eine der Taktperiode T_{SZ} entsprechende Zeit verschoben früher gesendet.

Wenn der langsamere Datenstrom von der Station ST2 ausgeht und in der Station ST1 empfangen wird, dann empfängt der Empfänger E zunächst das Infobit (Fig. 7), mit dem ihm die Korrektur des Datenstroms angezeigt wird. Der Empfangszähler EZ erhält von der Empfangszählerkorrektur EZK die Information, daß der empfangene Datenstrom um eine Bitbreite verschoben ist. Er wird dann um eine Taktperiode T_{EZ} korrigiert. T_{EZ} ist die Taktperiode des dem empfangenen Datenstrom entsprechenden kontinuierlichen Datenstroms. Die Information, daß ein korrigierter Datenstrom empfangen wird, geht auch an den Vergleicher VGL und den Expander EX, der ein Bit weniger ausliest. Anschließend wird die Empfangszählerkorrektur EZK zurückgesetzt.

## Patentansprüche

1. Verfahren zur bidirektionalen Übertragung von digitalen Daten über eine Glasfaser, mit welchem die Daten vom Sender einer Station zum Empfänger einer am anderen Ende der Glasfaser befindlichen Station übertragen werden, mit welchem jeweils die Bits von zu sendenden Datenströmen ohne Änderung der Übertragungsgeschwindigkeit in gleichbleibender Anzahl paketweise um einen Faktor >2 zu Bursts komprimiert werden, mit welchem die Bursts der einen Übertragungsrichtung in den Pausen zwischen den Bursts der anderen Übertragungsrichtung vom jeweiligen Sender über die Glasfaser übertragen werden und mit welchem die kontinuierlichen Datenströme aus den vom jeweiligen Empfänger empfangenen Bursts wiedergewonnen werden, dadurch gekunnzeichnet,
- daß zur Festlegung der Übertragungsraten in den Stationen (ST1,ST2) an den beiden Enden der Glasfaser (G) voneinander unabhängige externe Taktgeber (T1,T2) verwendet werden,
- daß bei einer Abweichung der Frequenzen der beiden Taktgeber (T1,T2) voneinander die Bursts des Datenstroms mit der niedrigeren Übertragungsrate in Abständen gegenüber den Bursts des anderen Datenstroms jeweils um eine Bitbreite des zugehörigen kontinuierlichen Datenstroms früher gesendet werden,
- daß diese Verschiebung der Bursts dem jeweiligen Empfänger (E) durch den dem ersten zu verschiebenden Burst vorangehenden Burst durch mindestens ein entsprechendes Informationsbit mitgeteilt wird und
- daß dem die Verschiebung meldenden Burst des Datenstroms mit der niedrigeren Übertragungsrate an definierter Stelle innerhalb seiner Datenbits ein Zusatzbit hinzugefügt wird, das vom Empfänger (E) der empfangenden Station (ST1,ST2) nicht mit ausgelesen wird.

2. Verfahren nach Anspruch 1, dadurch gekennzeichnet, daß das Informationsbit mit den Steuerbits des Datenstroms übertragen wird.

## Claims

1. A process for the bidirectional transmission of digital data through a glass fiber, whereby the data are transmitted by the emitter of one station to the receiver of a station located at the other end of the glass fiber, where the bits of data to be transmitted are compressed by a factor > 2 into bursts, in packages of equal quantities, without changing the transmission speed, where the bursts in one direction of transmission are sent by the respective emitter through the glass fiber during the pauses between the bursts in the other direction of transmission and where the continuous streams of data are recovered from the bursts received by the respective receiver, characterized in
- that independent, external pulse generators (T1,T2) are used in the stations (ST1,ST2) at both ends ofthe glass fiber (G), to determine the transmission rate,
- that when the frequencies of both pulse generators (T1,T1) deviate from each other, the bursts of the data stream with the lower transmission rate are send earlier in intervals, with respect to the bursts of the other data stream, by the width of one bit of the pertinent continuous stream of data,
- that this displacement of the bursts is communicated by at least one information bit to the respective receiver (E) by the burst preceding the first burst to be displaced and
- that an extra bit is added, in a defined place, to the burst announcing the displacement of the stream of data with the lower transmission rate, which is not read by the receiving station (ST1,ST2).

2. A process according to claim 1, characterized in that the information bit is transmitted with the control bits of the data stream.

## Revendications

1. Procédé de transmission bidirectionnelle de données numériques par l'intermédiaire d'une fibre de verre, par lequel les données sont transmises de l'émetteur d'une station au récepteur d'une station se trouvant à l'autre extrémité de la fibre de verre, par lequel les bits des flux de données à émettre sont chaque fois comprimés en salves selon un facteur > 2 sous forme de paquets en un nombre restant égal, sans modification de la vitesse de transmission, par lequel les salves de l'un des sens de transmission sont transmises par chaque émetteur par l'intermédiaire de la fibre de verre pendant les pauses entre les salves de l'autre sens de transmission, et par lequel les flux de données en continu émanant des salves reçues par chaque récepteur sont récupérés, caractérisé en ce que
- l'on utilise pour la détermination des vitesses de transmission dans les stations (ST1, ST2) aux deux extrémités de la fibre de verre (G) des horloges externes indépendantes l'une de l'autre,
- en cas de différence de fréquence entre les deux horloges (T1, T2) l'une par rapport à l'autre, les salves du flux de données ayant la plus faible vitesse de transmission sont émises à des intervalles chaque fois plus en avance d'une largeur de bit du flux de données continu correspondant par rapport aux salves de l'autre flux de données,
- ce décalage des salves est communiqué à chaque récepteur (E) par la salve précédant la première salve à décaler, par au moins un bit d'information correspondant et
- qu'est ajouté à la salve du flux de données présentant la vitesse de transmission la plus faible signalant le décalage, en un point défini à l'intérieur de son bit de données, un bit supplémentaire qui n'est pas appelé en même temps par le récepteur (E) de la station de réception (ST1, ST2).

2. Procédé selon la revendication 1, caractérisé en ce que le bit d'information est transmis avec les bits de commande du flux de données.
